Europäisches Patentamt

European Patent Office

Office européen des brevets

(11) Numéro de publication : **0 447 386 A2**

# (12) DEMANDE DE BREVET EUROPEEN

(21) Numéro de dépôt : **91870041.0**

(51) Int. Cl.⁵ : **G06F 12/14**

(22) Date de dépôt : **14.03.91**

(30) Priorité : **15.03.90 BE 9000293**

(43) Date de publication de la demande :
**18.09.91 Bulletin 91/38**

(84) Etats contractants désignés :
**AT BE CH DE DK ES FR GB GR IT LI LU NL SE**

(71) Demandeur : UNINA S.A.
Rue de Coquelet 134
B-5000 Namur (BE)

(72) Inventeur : Gérard, Pierre
Rue Havée Jacques 14
B-4287 Lincent (BE)
Inventeur : Patiny, Olivier
Boulevard d'Herbatte 79
B-5000 Namur (BE)

(74) Mandataire : Vanderperre, Robert et al
Bureau Vander Haeghen S.A. Rue Colonel
Bourg 108 A
B-1040 Bruxelles (BE)

(54) Système de sécurité pour système informatique.

(57) Un système de sécurité pour contrôler l'accès à un système informatique, dans lequel un processus d'encryptage/décryptage des données ne se trouve initialisé que lorsqu'un utilisateur légitime, détenteur d'un module de télécommande (20) se trouve à proximité des équipements et dans lequel les dispositifs d'entrée/ sortie (4) du système informatique sont verrouillés automatiquement dès que l'utilisateur légitime s'éloigne des équipements, même momentanément. De préférence, la communication entre le module de télécommande (20) et un microprocesseur de validation (11) incorporé dans le système informatique est elle-même contrôlée par encryptage au moyen d'un code de contrôle (K2).

EP 0 447 386 A2

Jouve, 18, rue Saint-Denis, 75001 PARIS

FIG. 1

# SYSTEME DE SECURITE POUR SYSTEME INFORMATIQUE

La présente invention concerne un système de sécurité et un procédé destiné à assurer un contrôle efficace de l'accès à un système informatique et rendre inaccessibles à des personnes non autorisées, les données résidant dans la mémoire de masse interne (HDU) ou externe (LAN) d'un système informatique.

L'extension de l'utilisation des ordinateurs pour la sauvegarde des données les plus diverses rend celles-ci vulnérables si des précautions ne sont pas prises pour limiter l'accès à ces données. Dans le cas de données revêtant un intérêt économique ou stratégique capital, par exemple, de telles précautions relèvent même d'une nécessité absolue qui impose d'incorporer à un système d'ordinateur de quelque importance, un système de protection qui en restreint l'accès.

Divers systèmes sont connus pour contrôler l'accès à un ordinateur. Parmi ces systèmes connus, un système de protection fait appel à un procédé d'encryptage/décryptage des données. Une cellule d'encryption/décryption, installée dans l'ordinateur, est destinée à recevoir une clé d'encryption, sous forme d'un mot binaire, laquelle clé d'encryption est lue sur une carte magnétique présentée par un utilisateur. La clé d'encryption sert à encrypter ou coder les données que l'on implante en mémoire et ces données ne sont dès lors déchiffrables qu'à l'aide de la clé d'encryption correcte. Pour pouvoir déchiffrer des données appelées de la mémoire de l'ordinateur ainsi protégé, il faut alors qu'un utilisateur ait introduit la clé d'encryption correcte.

Un tel système assure certes un contrôle de l'accès initial à un ordinateur et permet à un utilisateur légitime seulement, pourvu qu'il introduise la clé correcte, d'initialiser correctement le processus d'encyptage et de décryptage des données et de faire tourner un programme de travail. Dès que la clé d'encryption a été introduite, l'ordinateur exécute toutes les tâches demandées et ses organes d'entrée/sortie sont utilisables sans restriction aucune.

Or, il se peut que, durant un éloignement momentané de l'utilisateur légitime, une personne non autorisée manipule le clavier de commande et ait accès à des données qu'elle ne devrait pas connaître ou même modifie des données résidant en mémoire. Une telle possibilité est inacceptable dans maints cas.

Le but de la présente invention est de proposer un système de protection avec encryptage qui rend un ordinateur opérationnel en présence d'un utilisateur autorisé seulement de manière qu'il soit impossible à une personne non autorisée quelconque de se servir de l'ordinateur à l'insu d'un utilisateur légitime, même si l'intrus possède des informations secrètes qui lui permettraient de s'introduire frauduleusement dans le système ou même s'il bénéficie d'une complicité intérieure.

Conformément à un aspect de l'invention il est proposé un système de sécurité pour contrôler l'accès à un système informatique dans lequel les données sont encryptées à l'aide d'une clé d'encryption, lequel système de sécurité est remarquable en ce qu'il comprend en outre un module de validation incorporé dans le système informatique, ledit module de validation comprenant un microprocesseur connecté d'une part à l'entrée de commande de la cellule d'encryption/décryption et d'autre part à un émetteur/récepteur de signaux ayant une portée de communication relativement faible, un module de télécommande destiné à être détenu par un utilisateur légitime, ledit module de télécommande comprenant un microprocesseur protégé connecté à un émetteur/récepteur de signaux compatible avec l'émetteur/récepteur de signaux précité, le microprocesseur mémorisant notamment une clé d'encryption destinée à être émise par l'émetteur associé, et en ce que le microprocesseur du module de validation est agencé pour recevoir la clé d'encryption captée par le récepteur de signaux associé et pour transmettre ladite clé d'encryption à la cellule d'encryption/décryption de manière à initialiser le processus d'encryptage/décryptage des données dans le système informatique.

Le microprocesseur de module de validation étant protégé contre une lecture de sa mémoire interne peut contenir en permanence la clé d'encryption/décryption et ne la communiquer à la cellule d'encryption/décryption que s'il a pu vérifier par un algorithme la validité de la télécommande.

Dans un mode de réalisation préféré de l'invention, le module de validation est agencé de manière que lorsqu'il ne reçoit pas ou ne reçoit plus un message d'un module de télécommande légitime, il produise un signal de verrouillage pour verrouiller les dispositifs d'entrée/sortie du système informatique de manière à empêcher l'utilisation de ces dispositifs d'entrée/sortie.

Grâce à l'invention l'initialisation du processus d'encryptage/décryptage ne peut se faire correctement que lorsqu'un utilisateur légitime se trouve à proximité de l'équipement protégé et est capable de surveiller l'accès aux dispositifs d'entrée/sortie. De plus, dès que l'utilisateur légitime s'absente, même momentanément, il devient impossible à un tiers d'utiliser les dispositifs d'entrée/sortie et donc d'avoir accès aux données.

Conformément à un autre aspect de l'invention, il est proposé de contrôler en outre l'établissement de la communication entre un module de télécommande et le module de validation grâce à un processus d'authentification protégé lui aussi. Un code (K2) se trouve implanté dans le module de télécommande de manière que ce code serve à encrypter le message transmis au module de validation lorsque celui-ci se trouve à portée de communication du module de télécommande. Le module de validation est organisé de manière qu'il vérifie si le code (K2) encryptant le message reçu est un code authentique et de manière que, lorsqu'il constate que ledit code est authentique, il produise un message pour appeler la clé d'encryption (K1) mémorisée dans le module de télécommande afin d'initialiser le processus d'encryptage/décryptage des données.

On observera que l'invention procure ainsi une double sécurité en ce sens que non seulement les données sont encryptées, ce qui ne les rend lisibles qu'à l'aide d'une clé, mais également que l'échange de messages entre le module de télécommande de l'utilisateur et le module de validation incorporé dans l'ordinateur est protégé par encryptage au moyen d'un code. Même la communication initiale avec le système protégé est donc déjà restreinte et protégée.

Le processus d'authentification du code de contrôle est avantageusement répété de façon régulière à une cadence prédéterminée, par exemple toutes les cinq secondes, et lorsque le message encrypté par le code de contrôle authentique n'est plus reçu, les dispositifs d'entrée/sortie se trouvent verrouillés.

D'autres particularités de l'invention apparaîtront à la lecture de l'exposé qui suit dans lequel un mode de réalisation exemplaire est décrit à l'aide des dessins joints.

La figure 1 est un schéma synoptique d'un mode de réalisation exemplaire du système de sécurité selon l'invention.

La figure 2 est un organigramme illustrant le procédé mis en oeuvre dans le système de sécurité selon l'invention.

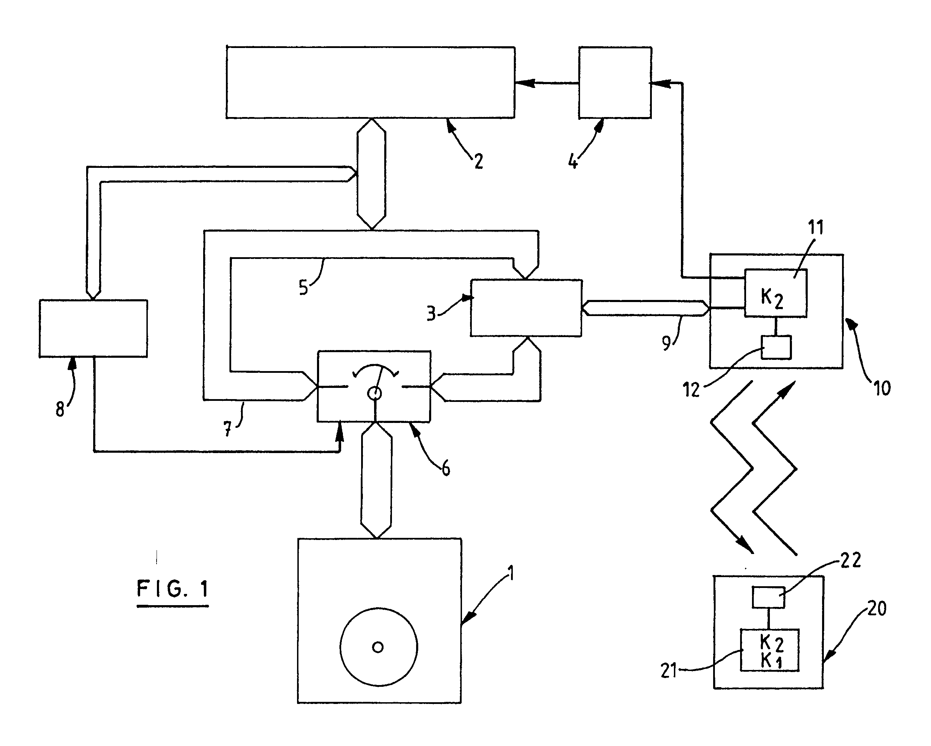

Se reportant à la figure 1, la mémoire de masse (interne ou externe) d'un système informatique est identifiée par 1, l'unité de traitement centrale par 2, une cellule d'encryption/décryption par 3 et les dispositifs d'entrée/sortie (clavier, souris, écran de visualisation, etc) sont désignés globalement par 4. La cellule d'encryption/décryption, d'une manière connue en soi, sert à encrypter les données qui doivent être placées dans la mémoire 1 et à décrypter les données lues dans la mémoire. Le processus d'encryptage/décryptage se fait à l'aide d'une clé d'encryption que l'utilisateur du système informatique doit introduire dans le système. La cellule d'encryption/décryption 3 est organisée à cet effet au moyen d'un algorithme approprié quelconque, par exemple les algorithmes connus appelés DES et RSA ou un algorithme équivalent. Les données devant être rangées en mémoire sont lancées par l'unité centrale 2 dans le bus de données 5 qui les introduit dans la cellule d'encryption/décryption 3; les données encryptées sont ensuite acheminées par l'intermédiaire d'un dispositif aiguilleur 6 vers la mémoire 1. Les données lues dans la mémoire 1 suivent le chemin inverse jusqu'à la cellule d'encryption/décryption 3 où elles sont décryptées; les données en clair sont acheminées par le bus de données 5 vers l'unité centrale 2 et les dispositifs de sortie 4. Les ordres et les signaux de contrôle ne sont pas encryptés et sont véhiculés entre le bus 5 et le dispositif aiguilleur 6 par la ligne 7. La commutation du dispositif aiguilleur 6 est commandée par des signaux venant d'une cellule de commande 8. Dans les systèmes connus, la clé d'encryption utilisée dans la cellule 3 est introduite dans le système sans qu'il soit procédé à un contrôle particulier.

L'invention, au contraire, vise à contrôler de façon stricte l'introduction de la clé d'encryption dans le système informatique de manière à n'autoriser l'initialisation du processus d'encryptage/décryptage que sous des conditions prescrites et de manière à empêcher l'accès au système lorsque les conditions prescrites ne sont plus satisfaites.

Conformément à un premier aspect de l'invention, on incorpore au système informatique un module de validation électronique 10 destiné à contrôler l'accès au système. Le module de validation 10 comprend un microprocesseur 11 connecté à une ligne de données 9 aboutissant à l'entrée de commande de la cellule d'encryption/décryption 3 afin d'y introduire la clé d'encryption et à un émetteur/récepteur de signaux 12 ayant une portée de communication relativement réduite, limitée par exemple à cinq mètres. Le microprocesseur 11 mémorise de préférence un code de contrôle de référence K2' dont on verra l'utilisation plus loin. Le microprocesseur 11 est organisé notamment pour recevoir la clé d'encryption K1 par l'intermédiaire du récepteur de signaux associé et transmettre ladite clé d'encryption à la cellule d'encryption/décryption 3.

La clé d'encryption K1 se trouve implantée dans un module de télécommande 20 destiné à être détenu par un utilisateur légitime du système informatique. Ce module de télécommande est par exemple un petit boîtier de 60x90x18 mm de dimensions, qui comprend un microprocesseur protégé 21 associé à un émetteur/récepteur de signaux 22 compatible avec l'émetteur/récepteur 12 du module de validation 10. Le microprocesseur 21 mémorise notamment une clé d'encryption K1 destinée à être transmise par l'émetteur de signaux 12.

L'émetteur 12 et le récepteur de signaux 22 précités sont prévus pour être capables de communiquer entre eux avec une portée relativement restreinte, limitée par exemple à cinq mètres. La communication entre le module de télécommande 20 et le module de validation 10 s'établit et se maintient pourvu que et aussi longtemps que l'utilisateur portant le module de télécommande se trouve à une distance du système protégé, qui est inférieure à la portée de communication entre les émetteur et récepteur précités. Ladite portée de communication est limitée de telle manière que l'accès au système protégé soit permis lorsqu'un utilisateur légitime est présent et capable matériellement de manipuler les dispositifs d'entrée/sortie du système protégé, mais de manière que l'accès aux dispositifs d'entrée/sortie soit contrôlé dès que l'utilisateur légitime n'est plus en mesure de surveiller efficacement l'accès audit système.

Ainsi donc, lorsqu'un utilisateur portant le module de télécommande 20 se trouve à portée de communication du système protégé, le récepteur 12 du module de validation 10 capte la clé d'encryption K1 qu'émet l'émetteur du module de télécommande et transmet cette clé à la cellule d'encryption/décryption 3 afin de permettre l'initialisation du processus d'encryptage/décryptage de façon correcte.

Par contre, lorsque la communication ne se trouve pas établie entre l'émetteur et le récepteur, c'est-à-dire lorsqu'un utilisateur légitime ne se trouve pas à proximité du système protégé, le processus d'encryptage/décryptage ne saurait être initialisé correctement.

De plus, conformément à l'invention, le microprocesseur 11 du module de validation 10 incorporé au système protégé est agencé de manière à produire un signal de verrouillage pour les dispositifs d'entrée/ sortie 4 lorsque les modules 10 et 20 ne communiquent pas ou ne communique plus entre eux, ce qui se produit dès que l'utilisateur légitime, détenteur du module de télécommande 20, s'est éloigné du système protégé, d'une distance supérieure à la portée de communication entre lesdits émetteur et récepteur. Il est dès lors impossible à toute personne non autorisée de manipuler ou de se servir des dispositifs d'entrée/sortie (clavier, souris, écran, etc) en l'absence d'un utilisateur légitime. Le programme de travail en cours tourne simplement jusqu'à son terme.

Dans un mode de réalisation simplifié, le module de validation 10 pourrait ne comporter qu'un récepteur de signaux qui capterait la clé d'encryption K1 émise par le module de télécommande 20 et transmettrait ladite clé à la cellule d'encryption/décryption 3 : l'initialisation de l'encryptage/décryptage ne se ferait correctement que lorsque la clé d'encryption correcte a été introduite.

Conformément à un deuxième aspect de l'invention, le système est organisé, non seulement pour protéger l'accès aux dispositifs d'entrée/sortie comme décrit plus haut, mais également pour contrôler l'introduction de la clé d'encryption. Dans ce but, le module de validation 10 est agencé et organisé pour communiquer avec le module de télécommande 20 de manière récurrente au moyen d'une liaison bidirectionnelle protégée comme on va le voir ci-après. Le processus de communication bidirectionnelle se déroule en deux phases : une phase d'authentification suivie d'une phase de validation.

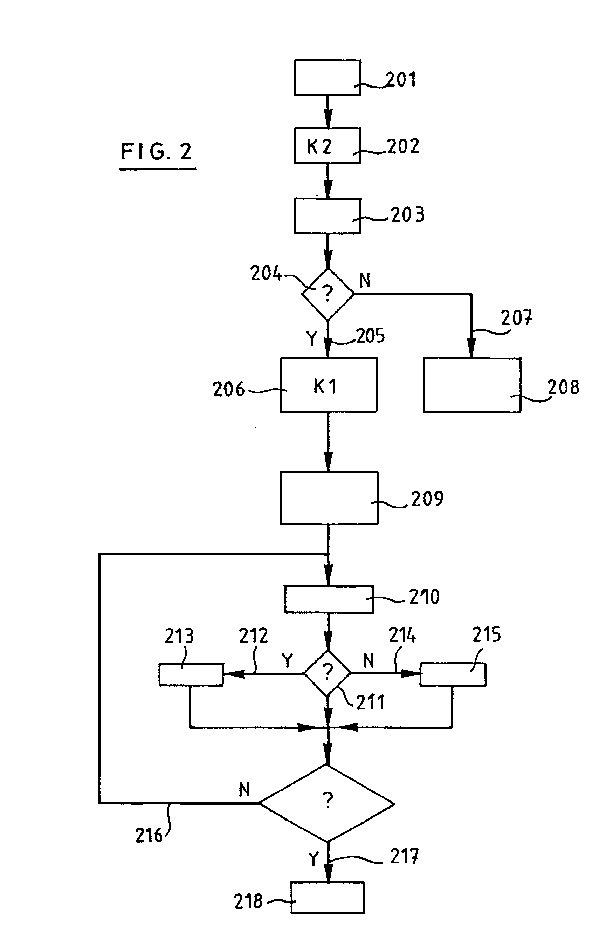

Le déroulement du processus est illustré par l'organigramme de la figure 2. Le système étant branché et mis en service (201) un module de télécommande 20 émet un message (202) encrypté par un code de contrôle K2 mémorisé dans son microprocesseur 21. Le message étant capté par l'émetteur/récepteur 12 du module de validation 10, le microprocesseur 11 de celui-ci décode (203) le message à l'aide du code de contrôle de référence K2' mémorisé afin d'authentifier (204) le code de contrôle K2 à l'aide d'un algorithme connu en soi, dont l'implantation relève de la compétence normale de l'homme du métier.

Si le code K2 est authentifié comme étant un code légitime pour avoir accès au système protégé (205), le microprocesseur 11 appelle la clé d'encryption K1 implantée dans le module de télécommande 20 et celui-ci émet ladite clé d'encryption (206).

Par contre, si le code K2 n'est pas authentifié (207), le microprocesseur 11 produit un signal de verrouillage (208) qui bloque les dispositifs d'entrée/sortie du système et empêche leur utilisation.

La clé d'encryption K1 envoyée par le module de télécommande 20 est reçue dans le module de validation 10 qui la transmet alors à la cellule d'encryption/décryption initialisant ainsi le processus d'encryptage/décryptage des données (209) à l'aide de la clé K1. Les données sont alors accessibles avec la clé d'encryption correcte.

Conformément à l'invention, le processus de contrôle se poursuit cependant par une authentification répétée à une cadence prédéterminée, par exemple toutes les cinq secondes. Le microprocesseur 21 est organisé pour lancer un message encrypté par le code de contrôle K2 de façon continue (210) et, de son côté, le microprocesseur 11 est organisé pour authentifier ce code à intervalles prédéterminés (211) par décryptage du message.

Tant que le code K2 continue à être authentifié (212), les dispositifs d'entrée/sortie 4 du système restent librement accessibles (213). Par contre, dès que le code K2 n'est plus authentifié ou disparaît (214), le microprocesseur 11 verrouille (215) les dispositifs d'entrée/sortie 4 qui sont dès lors rendus inutilisables. Le processus 210-214 se répète ensuite aussi longtemps que le système est en service (216). Dès qu'il est mis hors service (217), la clé d'encryption se trouve supprimée dans la cellule d'encryption/décryption (218).

Il est entendu que le module de télécommande peut mémoriser plusieurs clés d'encryption pour lui permettre d'avoir accès à plusieurs ordinateurs différents ou à plusieurs zones différentes d'une même mémoire. De même, le module de validation incorporé dans un système informatique peut mémoriser plusieurs codes de contrôle différents pour rendre des données rangées en mémoire accessibles à plusieurs utilisateurs.

Le mode de réalisation de l'invention décrit dans ce qui précède est un exemple donné à titre illustratif et l'invention n'est nullement limitée à cet exemple. Toute modification, toute variante et tout agencement équivalent doivent être considérés comme compris dans le cadre de l'invention.

**Revendications**

1. Système de sécurité pour un système informatique, comprenant une cellule d'encryption/décryption (5) destinée à encrypter les données qui doivent être rangées en mémoire (1) et décrypter les données lues dans la mémoire, caractérisé en ce qu'il comprend en outre :
un module de validation (10) incorporé dans le système informatique, ledit module de validation comprenant un microprocesseur (11) connecté d'une part à l'entrée de commande de la cellule d'encryption/décryption (3) et d'autre part à un émetteur/récepteur de signaux (12) ayant une portée de communication relativement faible, un module de télécommande (20) destiné à être détenu par un utilisateur légitime, ledit module de télécommande comprenant un microprocesseur protégé (21) connecté à un émetteur/récepteur de signaux (22) compatible avec l'émetteur/récepteur de signaux (12) précité, le microprocesseur (21) mémorisant notamment une clé d'encryption (K1) destinée à être émise par l'émetteur (22) associé,
et en ce que le microprocesseur (11) du module de validation (10) est agencé pour recevoir la clé d'encryption (K1) captée par le récepteur de signaux (12) associé et pour transmettre ladite clé d'encryption à la cellule d'encryption/décryption (3) de manière à initialiser le processus d'encryptage/décryptage des données dans le système informatique.

2. Système selon la revendication 1, caractérisé en ce que le microprocesseur (11) du module de validation (10) précité est organisé pour produire un signal de verrouillage en l'absence d'un signal à la sortie du récepteur de signaux (12), ledit signal de verrouillage servant à verrouiller les dispositifs d'entrée/sortie (4) du système informatique de manière à empêcher l'utilisation de ces dispositifs d'entrée/sortie.

3. Système selon la revendication 1 ou 2, caractérisé en ce que le microprocesseur (21) du module de télécommande (20) est connecté à un émetteur/récepteur de signaux (22) et mémorise en outre un code de contrôle (K2) servant à encrypter le message à émettre, et en ce que le microprocesseur (11) du module de validation (10) est connecté à un émetteur/récepteur de signaux (12), ledit microprocesseur (11) étant en outre agencé pour comparer le message encrypté par le code (K2) précité, reçu par l'intermédiaire du récepteur de signaux (12) associé, à un message encrypté par un code de référence (K2') et, lorsqu'il constate que ledit code (K2) correspond à un code de référence mémorisé, pour appliquer un message à son émetteur de signaux associé afin d'appeler la clé d'encryption (K1) mémorisée dans le microprocesseur (21) du module de télécommande (20) avec lequel il se trouve en communication de manière à introduire la clé d'encryption (K1) précitée dans la cellule d'encryption/décryption (5) et initialiser le processus d'encryptage/décryptage des données dans le système informatique.

4. Système selon la revendication 3, caractérisé en ce que le microprocesseur (21) du module de télécommande (20) est organisé pour transmettre de façon continue un message encrypté par le code de contrôle (K2) et en ce que le microprocesseur (11) du module de validation (10) est organisé pour authentifier le code de contrôle (K2) reçu de façon régulière à une cadence prédéterminée et pour produire un signal de verrouillage lorsqu'il constate que le code de contrôle (K2) n'est plus un code légitime.

5. Système selon l'une quelconque des revendications 1 à 4, caractérisé en ce que la mémoire (1) précitée est une mémoire de masse interne ou externe.

6. Procédé pour contrôler l'accès à un système informatique dans lequel les données sont encryptées à l'aide d'une clé d'encryption (K1), caractérisé en ce que l'on incorpore au système informatique un module de validation (10) destiné à introduire la clé d'encryption (K1) dans le système, on implante la clé d'encryption (K1) dans un module de télécommande (20) destiné à être détenu par un utilisateur légitime, et on établit une liaison de communication à portée réduite entre le module de validation (10) et le module de télécommande (20) de manière que celui-ci transmette ladite clé d'encryption au module de validation (10) lorsqu'il se trouve à portée de communication du module de validation précité, et de manière que ce dernier module (10), après avoir vérifié que le porteur du module de télécommande (20) est un utilisateur autorisé, introduise ladite clé d'encryption (K1) dans le système informatique afin d'initialiser le processus d'encryptage/décryptage.

7. Procédé selon la revendication 6, caractérisé en ce qu'on agence le module de validation (10) de manière que lorsqu'il ne reçoit pas ou ne reçoit plus un message d'un module de télécommande (20) légitime, il produise un signal de verrouillage pour verrouiller les dispositifs d'entrée/sortie (4) du système informatique de manière à empêcher l'utilisation de ces dispositifs d'entrée/sortie.

8. Procédé selon la revendication 6 ou 7, caractérisé en ce que l'on implante un code de contrôle (K2) dans le module de télécommande de manière que ce code serve à encrypter le message transmis au module de validation (10) lorsque celui-ci se trouve à portée de communication du module de télécommande (20), on agence le module de validation (10) de manière qu'il vérifie si le code (K2) encryptant le message reçu est un code légitime et de manière que, lorsqu'il constate que ledit code est légitime, il produise un message pour appeler la clé d'encryption (K1) mémorisée dans le module de télécommande (20).

9. Procédé selon la revendication 8, caractérisé en ce que le module de télécommande (20) envoie un message encrypté par le code de contrôle (K2) de façon continue et en ce que le module de validation (10) vérifie l'authenticité du code de contrôle (K2) dans le message reçu de façon régulière à une cadence prédéterminée.

FIG. 1

EP 0 447 386 A2

FIG. 2